Europäisches Patentamt

European Patent Office

Office européen des brevets

(11) Publication number : **0 479 476 A1**

# (12) EUROPEAN PATENT APPLICATION

(21) Application number : 91308707.8

(22) Date of filing : 25.09.91

(51) Int. Cl.⁵ : **B01J 20/22,** B01J 20/24,
B01J 20/26, C09K 3/32

(30) Priority : 03.10.90 GB 9021462

(43) Date of publication of application :
08.04.92 Bulletin 92/15

(84) Designated Contracting States :
BE DE DK ES FR GB GR IT LU NL

(71) Applicant : TERO-TECH LIMITED
Carlton House, Carlton Drive
London SW15 2TE (GB)

(72) Inventor : Gundry, Roger Jonathan Ketcheson
Kenmore, Shires Close
Ashstead, Surrey KT21 2LP (GB)

(74) Representative : Hands, Horace Geoffrey et al
GEORGE FUERY & CO Whitehall Chambers 23
Colmore Row
Birmingham B3 2BL (GB)

(54) Spillage absorption.

(57)   The invention provides a spillage absorption
material comprising wood pulp mixed with a
gelling compound adapted to be activated by
the spillage material, so as to effectively lock up
the spillage in the wood pulp when it has
absorbed the same. The material is contained in
a porous sac insoluble in the liquid to be absor-
bed.

EP 0 479 476 A1

Jouve, 18, rue Saint-Denis, 75001 PARIS

This invention relates to spillage absorption, particularly of liquids in industrial spillages.

Wood pulp, e.g. in the form a cellulose wadding, that is to say so-called cotton wool like materials, are well known for their ability to absorb and mop up liquid spillages. However, they suffer from the disadvantage that if compressed, the liquid drips out again. It is usually necessary to use an excess quantity of wadding in order to avoid this.

According to the present invention, a material for spillage absorption comprises wood pulp, e.g. cellulose wadding mixed with a gelling compound which is adapted to be activated by moisture.

Hence, the mixture of the invention may be used for mopping up the spillage, and the liquid effectively becomes locked up in the mixture by the activation of the gelling compound.

A suitable gelling compound is the polymer one sold by Allied Colloids under the name SALSORB 88 (Trade Mark).

The gelling agent is preferably in small particulate state, mixed in with the fibres, for example in a mixing machine, and present in the proportions of a few per cent, for example 10% by volume. That is to say there will be one part by volume of the gelling agent and nine parts by volume of the fibrous material.

According to a feature of the invention the mixture is packed in containers made of porous material, which is insoluble in the liquid to be absorbed. Hence the packages may be used without any unpacking. A preferred material is a non-woven polypropylene tissue-like fabric.

In one embodiment the package is a long tubular parcel of the fabric filled with the mixture, for use as a dam. In another embodiment the package is a pillow like sack of the fabric/filling to be used for deep pool spillages. In a third embodiment the package is a sachet, of say 20 or 30 cm square and a few cms thick for smaller spillages.

## Claims

1. A material for spillage absorption comprising wood pulp mixed with a gelling compound adapted to be activated by moisture.

2. A material for spillage absorption as claimed in Claim 1 comprising wood fibres and a gelling agent in small particulate state mixed with the fibres and present in the proportion of a few percent of the agent to the volume of the fibre.

3. A material as claimed in Claim 2 wherein the gelling agent is present in the proportion of about 10% by volume.

4. A spillage absorption package comprising a container made up of porous material which is insoluble in a liquid to be absorbed and containing the spillage absorption material as claimed in any preceding claim.

5. A spillage absorption package as claimed in Claim 4 wherein the package is a long tubular parcel of the fabric filled with a mixture for use as a dam.

6. A spillage absorption package in the form of a pillow-like sac.

7. A spillage absorption package in the form of a sachet between 20 and 30cms square and some few cms thick.

EP 0 479 476 A1

## European Patent Office

## EUROPEAN SEARCH REPORT

Application Number

EP 91 30 8707

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 339 461 (KIMBERLY-CLARK CO.)<br>* page 1, line 1 - line 6 *<br>* page 14; claims 1-6 *<br>--- | 1-3 | B01J20/22<br>B01J20/24<br>B01J20/26<br>C09K3/32 |
| X | EP-A-0 198 683 (THE PROCTER AND GAMBLE CO.)<br>* page 1; claims 1-6 *<br>--- | 1-3 | |
| A | US-A-3 901 236 (ASSARSSON)<br>* column 3, line 14 - column 5, line 27 *<br>--- | 1-3 | |
| A | GB-A-2 081 569 (ERIKSSON)<br>* page 1, line 83 - page 2, line 17 *<br>--- | 4-6 | |
| A | US-A-4 831 010 (HERRINGER)<br>--- | | |
| A | WO-A-8 606 647 (FREEMAN)<br>----- | | |

TECHNICAL FIELDS
SEARCHED (Int. Cl.5)

B01J
A61L
C09K
B01D

The present search report has been drawn up for all claims

| Place of search | Date of completion of the search | Examiner |
|---|---|---|
| THE HAGUE | 04 FEBRUARY 1992 | WENDLING J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

3